# EUROPEAN PATENT SPECIFICATION

(11) **EP 4 295 130 B1**
(45) Date of publication and mention of the grant of the patent: **26.03.2025**
(21) Application number: 22706348.4
(22) Date of filing: 15.02.2022
(51) Int. Cl.: G01L 1/14, G01L 1/18, G01L 1/20, G06F 3/041, G06F 3/045

(54) **FORCE SENSING DEVICE**
KRAFTMESSVORRICHTUNG
DISPOSITIF DE DÉTECTION DE FORCE

(30) Priority: 16.02.2021 GB 202102134
(43) Date of publication of application: 27.12.2023
(73) Proprietor: Peratech IP Ltd, Catterick Garrison DL9 4QJ (GB)
(72) Inventor: MITCHELL-WILLIAMS, Thomas, Benjamin, Durham DH1 5JW (GB); VOUTSAS, Apostolos, Theocharis, Vancouver, Washington 98660 (US)
(74) Representative: Atkinson & Company Intellectual Property Limited
(86) International application number: PCT/GB2022/000021
(87) International publication number: WO 2022/175638

(56) References cited:
- JP-A- 2005 091 106

## Description

### BACKGROUND OF THE INVENTION

The present invention relates to a force sensing device, an electronic device comprising a force sensing device and a method of manufacturing a force sensing device.

Force sensing devices are known to comprise matrix-style arrays of sensing elements or sensels arranged directly beneath a flexible "A" surface to form an electronic device such as a trackpad or flexible or foldable display. Beneath the "A" surface an active material is provided in combination with two electrodes to generate an output signal (such as the resistance of the force sensing device) in response to an applied force. The presence of the "A" surface is known to prevent large displacements and dilute the transfer of force to the sensing elements. Consequently, the sensing elements need to be sensitive to both small displacements and small forces, without compromising on the dynamic range of the force sensing device.

Previous solutions have included pre-loading force sensing devices to increase sensitivity to the first touch by reducing the subsequent deformation needed to achieve a change in the output signal. Pre-loading may also be used to compensate for integration tolerances in manufacture. In some cases, sensor assemblies may be oversized and subsequently pre-loaded during installation to overcome the manufacturing tolerances. However, this process of pre-loading can reduce the dynamic range of the force sensing device.

In addition, the design of conventional force sensing devices requires a further "B" surface opposite to the "A" surface in order to provide a reaction force to enable a force on the "A" surface to be measured by means of compression of the active material.

Further, on application of a force, the active material may reduce in thickness while increasing in a lateral direction. This further means that lateral expansion gaps and/or suitable patterning of the active material must be incorporated into current force sensing devices between the sensing elements, thereby limiting the pitch of the array.

JP 2005 091106 A (JAPAN SCIENCE & TECH AGENCY) published 07 April 2005 describes a two-dimensional distribution type force sensor capable of detecting the force in normal direction or tangential direction. The force sensor comprises a V groove formed on a base and electrodes formed on both sides of the V groove. A cylindrical force sensing material is separated by an air gap and can be brought into contact with the electrodes on application of a force.

### BRIEF SUMMARY OF THE INVENTION

According to a first aspect of the present invention, there is provided a force sensing device, as claimed in claim 1.

According to a second aspect of the present invention, there is provided a method of manufacturing a force sensing device, as claimed in claim 11.

Embodiments of the invention will be described, by way of example only, with reference to the accompanying drawings. The detailed embodiments show the best mode known to the inventor and provide support for the invention as claimed. However, they are only exemplary and should not be used to interpret or limit the scope of the claims. Their purpose is to provide a teaching to those skilled in the art. Components and processes distinguished by ordinal phrases such as "first" and "second" do not necessarily define an order or ranking of any sort.

### BRIEF DESCRIPTION OF THE SEVERAL VIEWS OF THE DRAWINGS

Figure 1 shows an example electronic device incorporating a trackpad comprising a force sensing device;
Figure 2 shows a schematic perspective view of a substrate for a force sensing device;
Figure 3 shows a cross-sectional view of the substrate of Figure 2;
Figure 4 shows the substrate of Figure 3 following the deposition of a plurality of electrodes;
Figure 5 shows the substrate in combination with an active material;

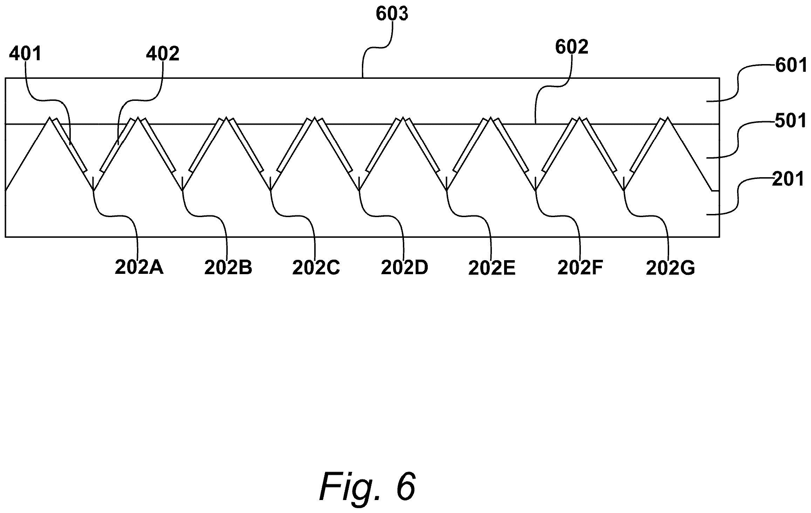

Figure 6 shows the deposition of an encapsulant;
Figure 7 shows a groove of the substrate in a rest configuration; and
Figure 8 shows the groove of Figure 7 on application of a force.

### DETAILED DESCRIPTION OF EMBODIMENTS OF THE INVENTION

### Figure 1

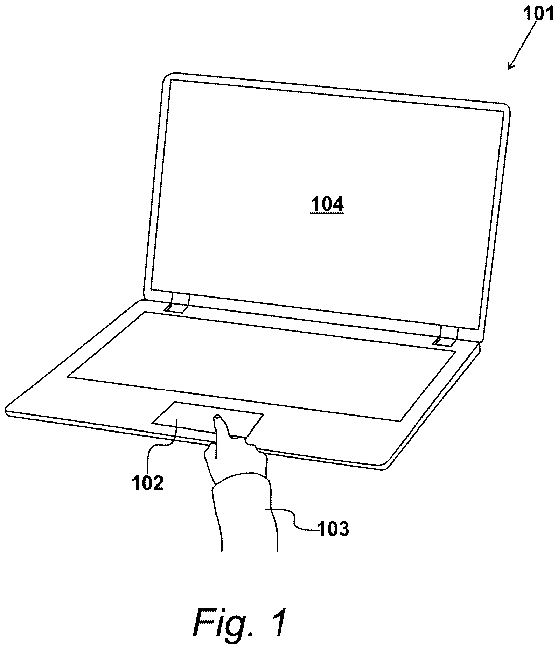

An example electronic device is illustrated in Figure 1. Electronic device **101** comprises a laptop computer comprising a trackpad **102.** Trackpad **102** can be utilised by user **103** to provide an input to electronic device **101,** such as by providing an input which is configured to move a cursor on the display **104** of electronic device **101.** To affect this, trackpad **102** comprises a force sensing device.

Trackpads of this type may therefore include force sensing devices and processing means configured to convert a pressure input signal to the trackpad (and force sensing device) to an output signal to display **104.** Conventional force sensing devices which may be utilised in such an application typically comprise parallel planar surfaces, with electrodes on opposing faces and coplanar with each other. Thus, in such an arrangement, a plurality of layers are arranged parallel to each other with a first electrode and a second electrode arranged with a layer of active material therebetween. In such devices, the active material may be a quantum tunnelling material, such as that available from the present applicant under the name QTC^{®}, which is a material which displays a piezoresistive response such that the material experiences a change in resistance in response to an applied force.

With such conventional force sensing devices, the planar arrangement of electrodes means that dilution of an applied force can occur when the force sensing device is integrated below an "A" surface, such as a display or top surface of the trackpad shown in the example. In some cases, this can mean that a light press does not activate the force sensing device adequately. In addition, a further hard bottom surface is also necessary to provide a complementary compressive force to ensure actuation.

While the example embodiment described here in Figure 1 illustrates a laptop computer and trackpad, it is appreciated that the invention described herein may further be utilised in respect of alternative electronic devices, such as, but not limited to, mobile telephones, tablet computers, touch screen displays or other touch input devices.

### Figure 2

To address these issues, the present invention provides an improved force sensing device for incorporating into such scenarios to improve the response from the force sensing device and reduce complexity of introducing compensating features during manufacture, which can affect tolerances.

A force sensing device which is suitable for use with an electronic device, such as electronic device **101** comprises a substrate **201.** The force sensing device described herein may therefore be suitably integrated into electronic device **101** as described with respect to Figure 1.

Substrate **201** comprises at least one groove, and, in this illustrated embodiment, comprises a plurality of grooves **202.** In the embodiment, substrate **201** comprises seven such grooves, however, it is appreciated that any other number of suitable grooves may be utilised, depending on the application in question and dimensions of the force sensing device and consequently the substrate itself.

According to the claimed invention, substrate **201** comprises a flexible non-conductive material. Substrate **201** may therefore be any suitable flexible non-conductive material, examples of which include those which comprise a polymer material.

The groove or plurality of grooves are formed by any suitable additive or subtractive manufacturing process. In an embodiment, the at least one groove is formed in substrate **201** by an embossing process. The embossing process comprises embossing the surface of a suitable polymer material, such as a thermoplastic material, using heat and pressure while passing the substrate through a patterned metal rollers to form the substrate comprising at least one groove. Similar embossing techniques may also be anticipated as forming part of the invention.

In an alternative embodiment, a resin mixture may be photo-cured into a pattern comprising at least one groove by means of a textured roller and template. The resin mixture may comprise a UV curable resin which is passed between the patterned roller and a carrier sheet having a release sheet thereon. Where the resin and textured roller make contact, UV light is used to cure the required shape (grooves) into the UV curable resin. It is appreciated that other suitable micro-embossing techniques may also be suitable to form the substrate as described herein.

### Figure 3

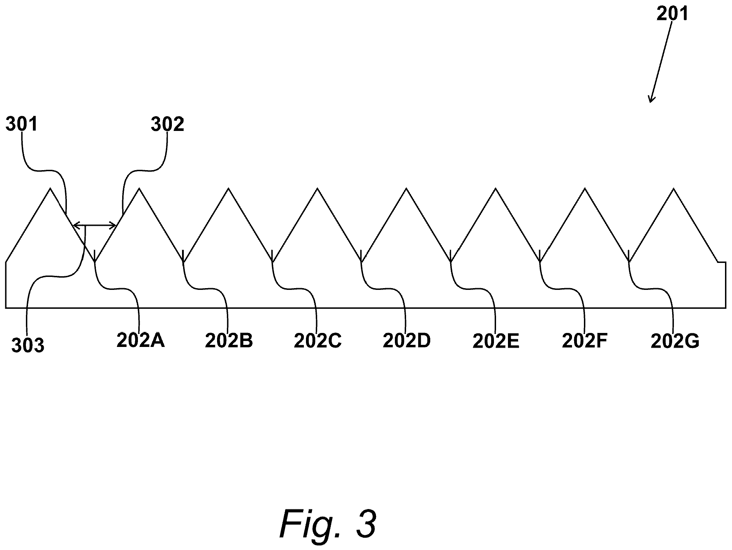

A cross-sectional schematic view of substrate **201** is shown in Figure 3. The plurality of grooves **202** are shown and each groove comprises a substantially similar cross-sectional shape. In the embodiment, the plurality of grooves provides a substantially saw-tooth cross-sectional shape in which each groove comprises a triangular cross-section. It is appreciated that the grooves may have alternative cross-sectional shapes such as, but not limited to, a curved U-shape or V-shape or a rectangular profile.

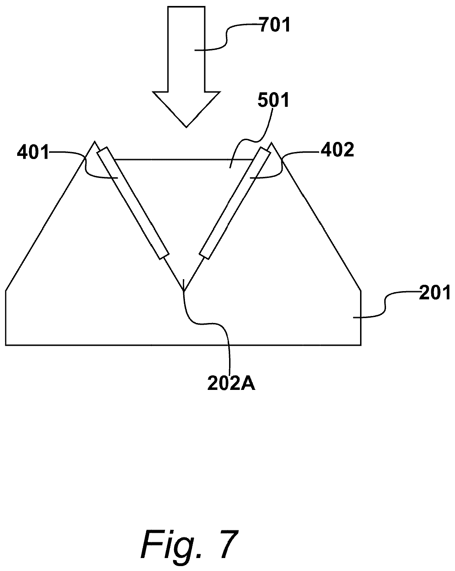

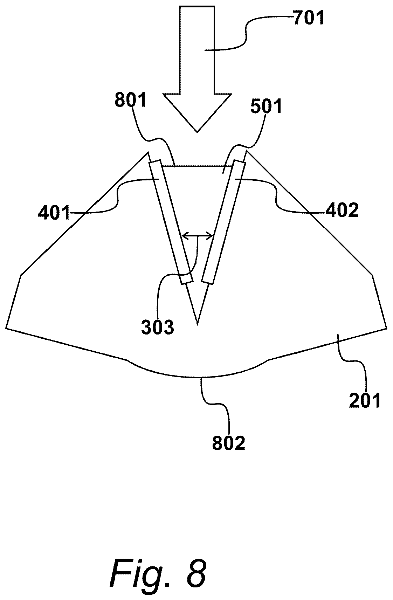

In each embodiment, however, each groove comprises a first face and a second face which are inclined to each other. Specifically, referring to groove **202A,** groove **202A** comprises face **301** and face **302,** with face **302** being inclined with respect to face **301.** Faces **301** and **302** are arranged a distance **303** apart from each other. As will be explained further with respect to Figures 7 and 8, on application of a force, distance **303** is configured to change such that faces **301** and **302** move apart from each other, or closer together. It is therefore appreciated that any cross-sectional shape which allows this to occur would be suitable for use in accordance with the invention.

### Figure 4

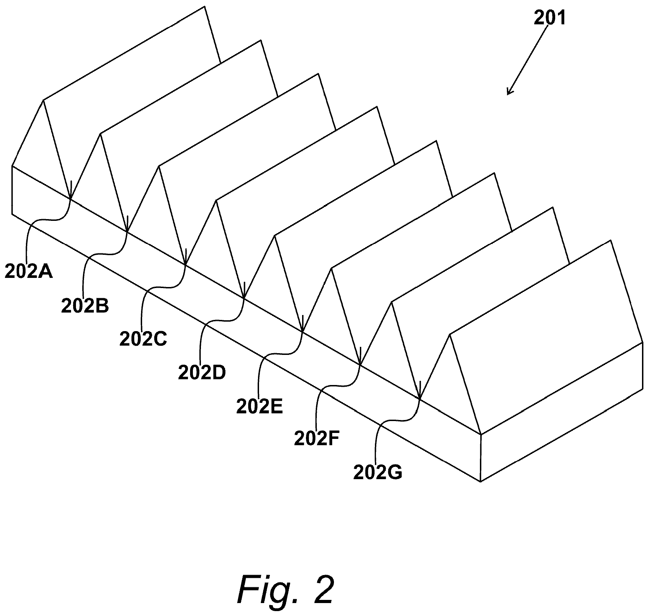

In manufacture, following the formation of substrate **201** as described with respect to Figures 2 and 3, electrodes are deposited onto the faces of each of the at least one groove.

Thus, again referring to groove **202A,** a first electrode **401** is deposited onto face **301** and a second electrode **402** is deposited onto face **302.** Similarly, each of the faces of the other grooves **202** receive a deposition of an electrode on their respective faces, which are arranged in a substantially similar manner to groove **202A.**

In the embodiment, each of the electrodes **401, 402** comprises a conductive material. In an embodiment, such a conductive material comprises a metallic material. Suitable metallic materials for either electrode **401** or electrode **402** include metallic materials comprising aluminium, titanium or copper. In an embodiment, each pair of electrodes (i.e., those on opposing faces, such as electrodes **401** and **402),** comprises a substantially similar metallic material. In an alternative embodiment, each pair of electrodes comprises different metallic materials.

In the embodiment, each said electrode may be deposited by any suitable manufacturing process, such as, but not limited to a physical vapor deposition process, an evaporation process, a pulse laser deposition process, a sputtering physical deposition process or molecular beam epitaxy. In order to ensure that the inclined faces **301, 302** are coated with the electrode material, and not the other parts of the groove **202A,** a line-of-sight deposition is utilised and the angle of the source of the depositing material relative to the substrate **201** is controlled to ensure that only the inclined faces receive the electrode material.

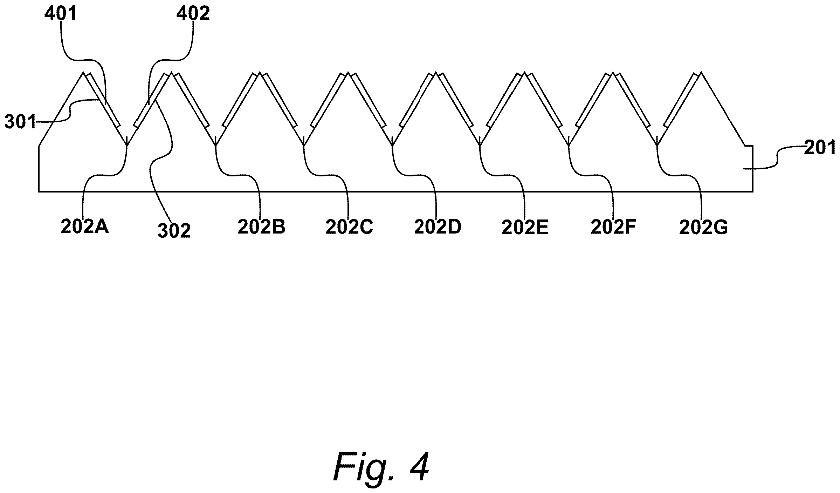

Following the deposition of the electrode material, each pair of electrodes are disconnected from each other and are spaced apart by the nature of the faces of the grooves and do not touch while in the rest configuration (when no force is applied) as shown in Figure 4.

### Figure 5

Once each pair of electrodes have been deposited onto their corresponding faces of each groove, an active material **501** is applied between each pair of electrodes.

As shown, the active material is applied to substrate **201** and when deposited onto substrate **201** positions into grooves **202** between each groove's respective faces. Consequently, active material **501** fills each of the at least one groove or plurality of grooves of the substrate in question. Each pair of electrodes **401, 402,** are also consequently encapsulated by the active material **501** such that the pair of electrodes **401, 402** and active material **501** can function as a force sensing device.

In an embodiment, active material **501** comprises a suitable material for formation of a force sensing device. In particular, a choice of active material may determine the type of force sensing device formed. In an embodiment, a resistive mode sensing device is constructed when active material **501** comprises a piezoresistive composite such as a quantum tunnelling material composite, a porous conductive foam or a mesh comprising a plurality of conductive elastomeric fibres.

In an alterative embodiment, active material **501** comprises a flexible dielectric such as an elastomer or elastomer foam to form a capacitive sensing device.

In the embodiment, it may be desirable to utilise porous materials as active material **501.** Porous materials advantageously reduce hysteresis and provide a faster response to applied force. Further, porous materials do not experience significant Poisson expansion as the compression under applied force is accommodated as a volume change. In addition, in the embodiment where active material **501** comprises a flexible dielectric to form a capacitive sensing device, the collapse of the pores during compression additively increases the signal measured by increasing the effective permittivity of the material.

In an embodiment where active material **501** comprises a composite material such as a quantum tunnelling material such as that available from the present applicant, Peratech Holdco Limited, Catterick Garrison, United Kingdom, under the name QTC^{®}, measurement of an applied force is dependent on the starting resistance of the composite material when there is zero force. A small capacitive signal may be measured when a very small deformation force is applied, before switching to a resistance signal when higher forces occur in the force sensing device described herein.

Thus, when a force is applied, an electrical property can be measured from the active material to enable the force sensing device to function as a capacitive force sensing device (when the active material is an insulating material), a hybrid force sensing device exhibiting both capacitive and resistive sensing (when the active material is a composite material) or a resistive force sensing device (when the active material is a force sensing device).

In the embodiment, active material **501** comprises a lower elastic modulus than substrate **201.**

### Figure 6

A force sensing device in accordance with the present invention may further comprise an encapsulant configured to prevent contamination of the force sensing device. Following application of the active material **501,** an encapsulant **601** is further applied to an upper surface **602** of active material **501.** Thus, the encapsulant **601** encapsulates the active material **501,** the electrodes **401, 402** and grooves **202** to protect the force sensing device.

In the embodiment, the force sensing device is encapsulated against environmental contamination. The need for this purpose may vary depending on the application in which the force sensing device is utilised, however, the purpose of the encapsulant is to provide an environmental barrier to, for example, water or air ingress.

In a further embodiment, the encapsulant serves a dual purpose and comprises an adhesive. In this embodiment, the upper surface **603** of encapsulant **601** is configured to be attached to a surface of electronic device **101** to hold the force sensing device in position.

In an embodiment, the adhesive comprises a UV curable material, a thermally curable material or a polymer resin in a solvent system. It is appreciated that any other suitable encapsulating material may be utilised to retain a barrier to the force sensing device.

When the force sensing device is incorporated into an electronic device, as described in Figure 1, for example, the encapsulant/adhesive functions to ensure that the force sensing device does not slide around on the surface of the electronic device to which it is attached. Ensuring a lack of slippage means that the force sensing device can function accurately in response to the applied force to the electronic device which is then transmitted to the force sensing device.

### Figure 7

On application of an applied force, active material **501** is configured to deform and the distance **303** between faces **301** and **302** changes such that a change in an electrical property from active material **501** can be measured.

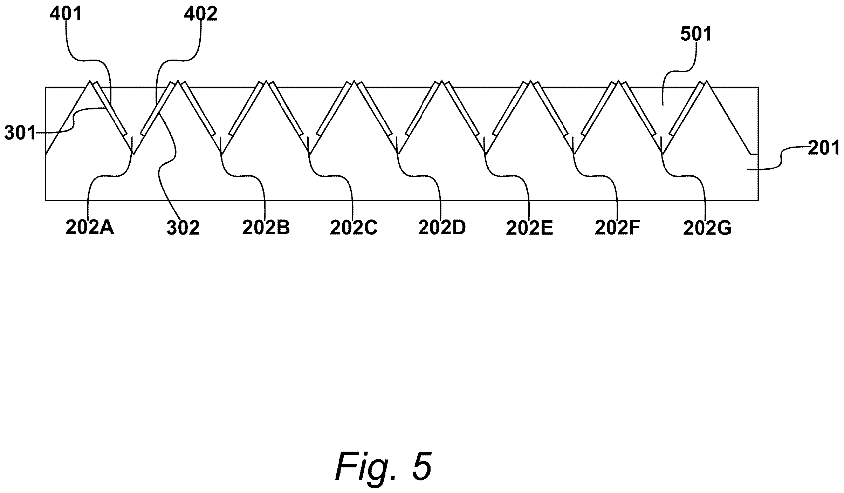

Figure 7 shows a schematic of groove **202A** in isolation and a direction of applied force **701** to be received. In the embodiment shown in Figure 7, groove **202A** is in a rest configuration. Thus, when reading an electrical signal from active material **501,** the output signal will be consistent with the material at rest. Depending on the type of active material, as previously described with respect to Figure 5, the electrical property being measured, by means of a conventional electrical circuit, is, in an embodiment, a value of resistance. In a further embodiment, the electrical property being measure is a value of capacitance. In a further embodiment, both resistance and capacitance are measured and a complex impedance measurement takes place. It is appreciated that other electrical properties may be measured if this is suitable for the active material in question.

It is noted that the schematic of Figure 7 does not illustrate the encapsulant **601,** however it is appreciated that the mechanism described with respect to Figures 7 and 8 is substantially similar whether an encapsulant is included in the force sensing device or not.

In the embodiment, the orientation of groove **202A** in relation to force **701** means that groove **202A** faces towards the centre of curvature of force **701** when the force is applied. Thus, when force **701** is applied to the top surface of active material **501,** substrate **201** is configured to bend as active material **501** deforms to provide the change in electrical property. The change in electrical property can then be measured across electrodes **401** and **402** in a conventional manner. The electrical property changes in line with the deformation changes of the active material to provide variations of the electrical property in response to the change in applied force. In addition, the bending of the substrate and distance between the electrodes may be measured as an additional response.

### Figure 8

Applied force **701** provides a deformation to the force sensing device and specifically active material **501** and substrate **201,** as shown in the schematic of Figure 8. As force **701** is applied to an upper surface **801** of the force sensing device in the manner shown, active material **501** compresses, substrate **201** bends, distance **303** reduces and electrodes **401** and **402** move closer together.

When force **701** is applied to the force sensing device as described herein the response of the force sensing device is dependent on the orientation of the at least one groove. If the groove or grooves face toward the centre of curvature of applied force **701,** active material **501** within the grooves is compressed and electrodes **401** and **402** move closer together, reducing distance **303** as the force sensing device adopts the curvature of the upper surface **801** of the force sensing device. When a further surface is present on the underside of the force sensing device, active material **501** receives a compressive force which is magnified by the stress concentrating groove **202A** of substrate **201.**

In an alternative embodiment to that illustrated, for example if force **701** was applied from the underside **802** of the force sensing device, thereby ensuring that groove **202A** faced in the opposite direction to the centre of curvature of the force sensing device, then as the flexible substrate **201** bends in response to the applied force, distance **303** increases and the faces of groove **202A** move away from each other. Active material **501** is therefore placed in tension.

The stress placed on active material **501** under applied force **701** and the change in distance **303** between and orientation of electrodes **401** and **402** as the force sensing device deforms can be used to transduce the applied force **701** into a measurable electrical property, such as resistance or capacitance as described previously. Unlike conventional force sensing devices, a "B" surface is not required to provide a reactant force to the applied force; instead, it is the curvature of the substrate comprising at least one groove which provides the output signal for measurement. This therefore provides a simplified procedure for integrating the force sensing device into an electronic device, such as that described in Figure 1, which is less sensitive to manufacturing tolerances. Thus, a force sensing device in accordance with the present invention, for example, integrated into a flexible display or a keyboard or trackpad, can be securely adhered to a single surface (i.e., the "A" surface). This reduces the constraints of accurate and precise mechanical integration with the conventional "B" surface making the manufacturing and assembly process easier and increases reproducibility.

The at least one groove or plurality of grooves each act as a stress concentrator. The stress concentration about each groove ensures that the active material is deformed to a greater degree for a given applied force. Thus, each groove magnifies local stresses when subjected to a mechanical load such as an applied force. This increased local stress around the grooves themselves consequently increases the sensitivity of the force sensing device.

The described force sensing device provides a further advantage over conventional planar force sensing devices in that, because in conventional devices the upper layer and lower layers are required to make contact to provide an output signal, it is often necessary to include an air gap or spacer to reduce the effects in manufacture of pre-load or variations from device to device. The claimed invention does not require an air gap, nor is it dependent on the manufacture as the applied force is only measured in response to the deformation of the active material, rather than due to compression of the air gap, for example. This in turn allows the force sensing device to be more consistently integrated into an electronic device.

## Claims

1. A force sensing device, comprising:
a first electrode **(401)** and a second electrode **(402)**;
a substrate **(201)** comprising at least one groove **(202)**; and
an active material **(501)** between said first electrode and said second electrode;
said at least one groove comprises a first face **(301)** and a second face **(302)** inclined to said first face, and said first face and said second face are arranged a distance **(303)** apart from each other; and
said first electrode is deposited on said first face and said second electrode is deposited on said second face; **characterised in that**:
said substrate comprises a flexible non-conductive material such that said distance is configured to change on application of an applied force **(701)** to deform said active material and provide a change in an electrical property of said active material.

2. The force sensing device of claim 1, wherein said electrical property is at least one of the following:
a change in resistance; a change in capacitance.

3. The force sensing device of claim 1 or claim 2, wherein said active material comprises any one of the following:
a piezoresistive composite material; a quantum tunnelling material; a conductive foam; a mesh of conductive elastomeric fibres; a dielectric material; an elastomer; an elastomeric foam; a substantially porous material.

4. The force sensing device of any preceding claim, wherein said at least one groove is formed by an embossing process.

5. The force sensing device of any preceding claim, wherein at least one of said first electrode and said second electrode comprises any one of the following:
a conductive material; a metallic material; aluminium; titanium; copper.

6. The force sensing device of any preceding claim, wherein each said electrode is deposited by means of any one of the following:
a physical vapor deposition process; an evaporation process; a pulse laser deposition process; molecular beam epitaxy.

7. The force sensing device of any preceding claim, further comprising an encapsulant (601) configured to prevent contamination of said force sensing device.

8. The force sensing device of claim 7, wherein said encapsulant comprises an adhesive.

9. The force sensing device of claim 7 or claim 8, wherein said encapsulant comprises any one of the following:
a UV curable material; a thermally curable material; a polymer resin.

10. An electronic device **(101)** comprising the force sensing device of any preceding claim.

11. A method of manufacturing a force sensing device, comprising the steps of:
forming a substrate (201) comprising at least one groove (202) comprising a first face (301) and a second face (302) inclined to said first face, said first face and said second face positioned a distance apart from each other;
depositing a first electrode (401) on said first face
depositing a second electrode (402) on said second face; and
applying an active material (501) between said first electrode and said second electrode; **characterised in that**:
said substrate comprises a flexible non-conductive material such that, in use, on application of an applied force (701), said distance changes and deforms said active material to provide a change in an electrical property of said active material.

12. The method of claim 11, wherein said step of forming said substrate comprises forming said at least one groove by an embossing process.

13. The method of claim 11 or claim 12, further comprising the step of:
integrating said force sensing device into an electronic device **(101).**

14. The method of any one of claims 11 to 13, wherein at least one of said depositing steps comprises any one of the following:
a physical vapor deposition process; an evaporation process; a pulse laser deposition process; molecular beam epitaxy.

15. The method of any one of claims 11 to 14, further comprising the step of:
applying an encapsulant **(601)** to an upper surface **(801)** of said active material.

## Patentansprüche

1. Eine Kraftmessvorrichtung, umfassend:
eine erste Elektrode **(401)** und eine zweite Elektrode **(402);**
ein Substrat **(201)** mindestens eine Rille **(202)** umfassend; und
ein aktives Material **(501)** zwischen der besagten ersten Elektrode und der besagten zweiten Elektrode;
die besagte mindestens eine Rille umfasst eine erste Fläche **(301)** und eine zweite Fläche **(302),** die zu der besagten ersten Fläche geneigt ist, und die besagte erste Fläche und die besagte zweite Fläche in einem Abstand **(303)** voneinander angeordnet sind; und
bei der die besagte erste Elektrode auf der besagte ersten Fläche und die besagte zweite Elektrode auf der besagten zweiten Fläche aufgebracht ist; **dadurch gekennzeichnet, dass**:
das besagte Substrat ein flexibles, nichtleitendes Material umfasst, so dass der besagte Abstand so konfiguriert ist, dass er sich bei Kraftanwendung **(701)** ändert, um das besagte aktive Material zu verformen und eine Änderung einer elektrischen Eigenschaft des besagten aktiven Materials zu bewirken.

2. Die Kraftmessvorrichtung nach Anspruch 1, wobei die besagte elektrische Eigenschaft mindestens eine der folgenden ist:
eine Änderung des Widerstands; eine Änderung der Kapazität.

3. Die Kraftmessvorrichtung nach Anspruch 1 oder Anspruch 2, wobei das besagte aktive Material eines der folgenden umfasst:
ein piezoresistives Verbundmaterial; ein Quantentunnelmaterial; ein leitfähiger Schaum; ein Netz aus leitfähigen elastomeren Fasern; ein dielektrisches Material; ein Elastomer; ein elastomerer Schaum; ein im Wesentlichen poröses Material.

4. Die Kraftmessvorrichtung nach einem der vorhergehenden Ansprüche, wobei die besagte mindestens eine Rille der Kraftmessvorrichtung durch ein Prägeverfahren gebildet wird.

5. Die Kraftmessvorrichtung nach einem der vorhergehenden Ansprüche, wobei mindestens eine der besagten ersten und der besagten zweiten Elektroden eine der folgenden Eigenschaften umfasst:
ein leitendes Material; ein metallisches Material; Aluminium; Titan; Kupfer.

6. Die Kraftmessvorrichtung nach einem der vorhergehenden Ansprüche, wobei jede der besagten Elektroden mittels einer der folgenden Methoden aufgebracht wird:
ein physikalisches Aufdampfverfahren; ein Aufdampfverfahren; ein Pulslaser-Aufdampfverfahren; Molekularstrahlepitaxie.

7. Die Kraftmessvorrichtung nach einem der vorhergehenden Ansprüche, wobei dieses ferner ein Verkapselungsmittel **(601)** umfasst, das so konfiguriert ist, dass es eine Verunreinigung der Kraftmessvorrichtung verhindert.

8. Die Kraftmessvorrichtung nach Anspruch 7, wobei das besagte Verkapselungsmittel einen Klebstoff umfasst.

9. Die Kraftmessvorrichtung nach Anspruch 7 oder 8, wobei das besagte Verkapselungsmittel eine der folgenden Eigenschaften umfasst:
ein UV-härtbares Material; ein thermisch härtbares Material; ein Polymerharz.

10. Ein elektronisches Gerät **(101),** das eine Kraftmessvorrichtung nach einem der vorhergehenden Ansprüche umfasst.

11. Ein Verfahren zur Herstellung einer Kraftmessvorrichtung, das die folgenden Schritte umfasst:
Ausbilden eines Substrats **(201),** das mindestens eine Rille **(202)** umfasst, die eine erste Fläche **(301)** und eine zweite Fläche **(302)** umfasst, die zur ersten Fläche hin geneigt ist, wobei die besagte erste Fläche und die besagte zweite Fläche in einem Abstand voneinander angeordnet sind;
Ablagerung einer ersten Elektrode (401) auf der besagten ersten Fläche;
Ablagerung einer zweiten Elektrode **(402)** auf der besagten zweiten Fläche; und
Aufbringen eines aktiven Materials **(501)** zwischen der besagten ersten Elektrode und der besagten zweiten Elektrode; **dadurch gekennzeichnet, dass**:
das besagte Substrat ein flexibles, nicht-leitendes Material umfasst, so dass sich im Gebrauch bei Kraftanwendung **(701)** der besagte Abstand ändert und das besagte aktive Material verformt, um eine Änderung einer elektrischen Eigenschaft des besagten aktiven Materials zu bewirken.

12. Das Verfahren nach Anspruch 11, wobei der besagte Schritt des Ausbildens des besagten Substrats das Ausbilden der besagten mindestens einen Rille durch ein Prägeverfahren umfasst.

13. Das Verfahren nach Anspruch 11 oder Anspruch 12, wobei dieses ferner den folgenden Schritt umfasst:
Integration der besagten Kraftmessvorrichtung in eine elektronische Vorrichtung **(101).**

14. Das Verfahren nach einem der Ansprüche 11 bis 13, wobei mindestens einer der besagten Ablagerungsschritte einen der folgenden Schritte umfasst:
ein physikalisches Aufdampfverfahren; ein Aufdampfverfahren; ein Pulslaser-Aufdampfverfahren; Molekularstrahlepitaxie.

15. Das Verfahren nach einem der Ansprüche 11 bis 14, wobei dieses ferner die folgenden Schritte umfasst:
Aufbringen eines Verkapselungsmittels **(601)** auf eine obere Fläche **(801)** des besagten aktiven Materials.

## Revendications

1. Dispositif de détection de force comprenant :
une première électrode **(401)** et une deuxième électrode **(402)** ;
un substrat **(201)** comprenant au moins une rainure **(202)** ; et
un matériau actif **(501)** entre ladite première électrode et ladite deuxième électrode ;
ladite rainure au moins comprend une première face **(301)** et une deuxième face **(302)** inclinée par rapport à ladite première face, et ladite première face et ladite deuxième face sont disposées à une certaine distance **(303)** l'une de l'autre ; et
ladite première électrode est déposée sur ladite première face et ladite deuxième électrode est déposée sur ladite deuxième face ; **caractérisée en ce que** :
ledit substrat comprend un matériau souple non conducteur de sorte que ladite distance est configurée pour varier sous l'effet d'une force appliquée **(701)** afin de déformer ledit matériau actif et d'entraîner une modification d'une propriété électrique dudit matériau actif.

2. Le dispositif de détection de force de la revendication 1, où ladite propriété électrique est au moins l'une des suivantes :
un changement de résistance ; un changement de capacité.

3. Le dispositif de détection de force de la revendication 1 ou de la revendication 2, où ledit matériau actif comprend l'un des éléments suivants :
un matériau composite piézorésistif ; un matériau à effet tunnel quantique ; une mousse conductrice ; un réseau de fibres élastomères conductrices ; un matériau diélectrique ; un élastomère ; une mousse élastomère ; un matériau sensiblement poreux.

4. Le dispositif de détection de force de n'importe quelle revendication précédente, où ladite rainure au moins est formée par un processus d'embossage.

5. Le dispositif de détection de force de n'importe quelle revendication précédente, où au moins
l'une de ladite première électrode et de ladite deuxième électrode comprend l'un des éléments suivants :
un matériau conducteur ; un matériau métallique ; de l'aluminium ; du titane ; du cuivre.

6. Le dispositif de détection de force de n'importe quelle revendication précédente, où chaque électrode est posée suivant l'une des méthodes suivantes :
un processus de dépôt physique en phase vapeur ; un processus d'évaporation ; un processus de dépôt par laser pulsé ; l'épitaxie par faisceaux moléculaires.

7. Le dispositif de détection de force de n'importe quelle revendication précédente, comprenant en outre un encapsulant **(601)** configuré pour empêcher la contamination dudit dispositif de détection de force.

8. Le dispositif de détection de force de la revendication 7, dans lequel ledit encapsulant comprend un adhésif.

9. Le dispositif de détection de force de la revendication 7 ou de la revendication 8, où ledit encapsulant comprend l'un des éléments suivants :
un matériau réticulable aux UV ; un matériau réticulable à la chaleur ; une résine polymère.

10. Dispositif électronique **(101)** comprenant le dispositif de détection de force de n'importe quelle revendication précédente.

11. Méthode de fabrication d'un dispositif de détection de force, comprenant les étapes suivantes :
formation d'un substrat **(201)** comportant au moins une rainure **(202)** comprenant une première face **(301)** et une deuxième face **(302)** inclinée par rapport à ladite première face, ladite première face et ladite deuxième face étant positionnées à une certaine distance l'une de l'autre ;
dépôt d'une première électrode **(401)** sur ladite première face ;
dépôt d'une deuxième électrode **(402)** sur ladite deuxième face, et
application d'un matériau actif **(501)** entre ladite première électrode et ladite deuxième électrode ; **caractérisé en ce que** :
ledit substrat comprend un matériau souple non conducteur de sorte que, lors de l'utilisation, en cas d'application d'une force **(701)** ladite distance modifie et déforme ledit matériau actif afin de modifier une propriété électrique dudit matériau actif.

12. Méthode de la revendication 11, où ladite étape de formation dudit substrat comprend la formation de ladite rainure au moins par un processus d'embossage.

13. Méthode de la revendication 11 ou de la revendication 12, comprenant en outre l'étape consistant à :
intégrer ledit dispositif de détection de force dans un dispositif électronique **(101).**

14. Méthode de n'importe laquelle des revendications 11 à 13, où au moins une desdites étapes de dépôt comprend n'importe lequel des éléments suivants :
un processus de dépôt physique en phase vapeur ; un processus d'évaporation ; un processus de dépôt par laser pulsé ; l'épitaxie par faisceaux moléculaires.

15. Méthode de n'importe laquelle des revendications 11 à 14, comprenant en outre l'étape consistant à :
appliquer un encapsulant **(601)** sur une surface supérieure **(801)** de ladite matière active.
